# EUROPEAN PATENT SPECIFICATION

(11) **EP 0 664 645 B1**
(45) Date of publication and mention of the grant of the patent: **08.12.1999**
(21) Application number: 95300415.7
(22) Date of filing: 24.01.1995
(51) Int. Cl.: H04N 5/46, H04N 5/50, H04N 5/455, H03D 3/00

(54) **Broadcasting system discriminating television receiver**
Fernsehempfänger mit einem Rundfunksystemdiskriminator
Récepteur de télévision avec un discriminateur du système de radiodiffusion

(30) Priority: 24.01.1994 JP 560894; 20.06.1994 JP 13725994
(43) Date of publication of application: 26.07.1995
(73) Proprietor: KABUSHIKI KAISHA TOSHIBA, Kawasaki-shi, Kanagawa-ken 210-8572 (JP); TOSHIBA AVE CO., LTD, Minato-ku, Tokyo 105 (JP)
(72) Inventor: Miyahara, Yasunori, c/o Intel. Prop. Div., Tokyo (JP); Anzai, Syunichi, c/o Intel. Prop. Div., Tokyo (JP)
(74) Representative: Muir, Ian R.

(56) References cited:
- EP-A- 0 574 273

## Description

This invention relates to a television receiver, and more particularly to a broadcasting system discriminating television receiver which discriminates between an analog and a digital telecasting systems.

Further the present invention relates to a broadcasting system discriminating television receiver which can receive such digital modulating system as multi-valued PSK (Phase Shift Keying) modulation and such analog modulating system as FM modulation.

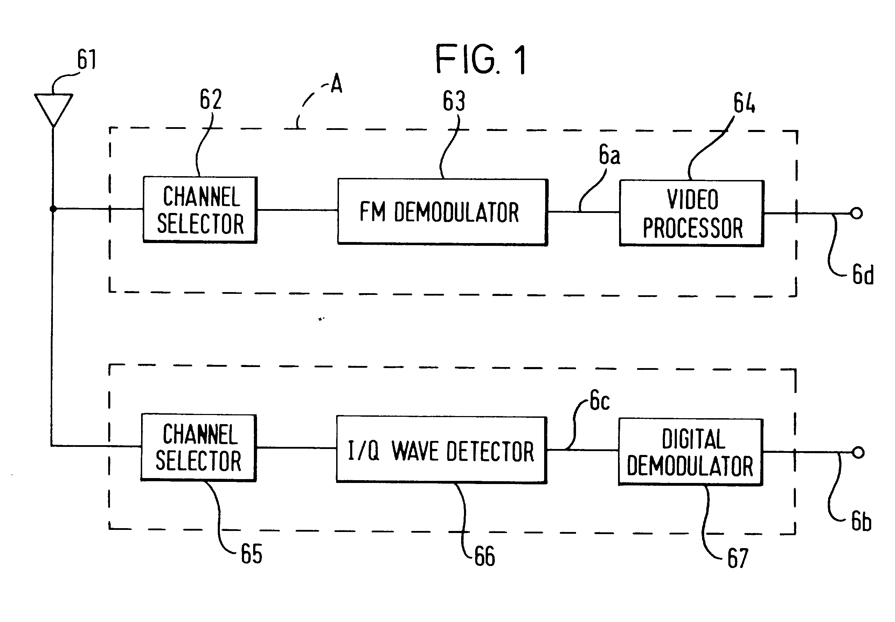

FIGURE 1 is a block diagram showing the configuration of the conventional analog and digital television (TV) receiving sets. The signal input from the antenna 61 is distributed either to the system A for receiving an analog broadcasting or to the system D intended for receiving the digital one.

In the case of the analog broadcasting with transmission by FM modulation system, the channel is chosen by selecting the signal input from the antenna 61 through the channel selector 62. The signal thus selected is input into the FM demodulator 63 to be output as FM-demodulated signal 6a. The demodulated signal 6a is then input into the video processor 64 to be output as the video signal 6b.

In the event of the digital broadcasting with transmission by a multiple PSK modulating system, the broadcasting channel is chosen selecting the signal input from the antenna 61 through the channel selector 65. The signal thus selected is input into the I/Q wave detector 66 to be output as an I/Q-detected output signal 6c. The I/Q-detected signal 6c is input into the digital demodulator 67 to be output as the analog video signal 6d on the one hand. and as a video output signal on the other.

Thus, the analog and digital broadcasts can be received by different television receivers. The users however could not determine if the telecast thus received and channel-selected was on the analog system or else on the digital one until the video signal was transformed into the actual picture on the screen. Further it was necessary for the users to change the telecasting system over into the system which corresponds to the signal received even when they could identify the system.

In the foregoing conventional broadcasting system discriminating television receiver which distinguishes analog telecast from digital one, not merely it was impossible to identify the telecast system before the image came out on the screen, but also the users were compelled to change the system into which corresponds to the signal received even after they could determine which was the system, analog or digital. Switching operation caused therefore some nuisance and was time-consuming.

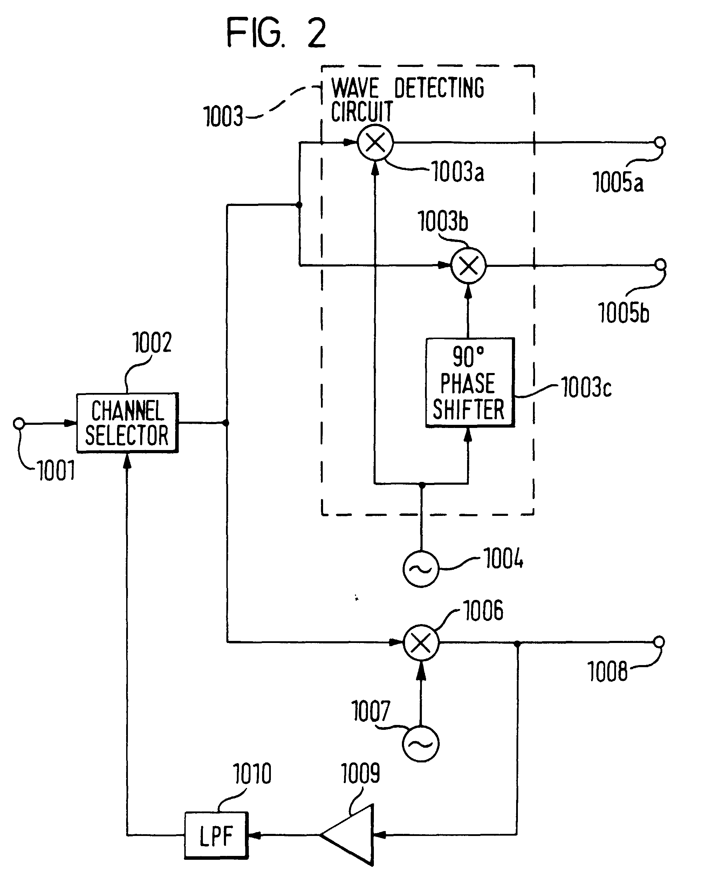

FIGURE 2 represents a system proposed as another instance of the television receiver which can cope with both analog and digital systems and which is conceived from the conventionally known, different television receiver s responding to the analog and digital modulations.

In FIGURE 2 the television signal input into the input terminal 1001 selects a desired channel at the channel selector 1002 to output either the IF (Intermediate Frequency) signal for digital demodulation or the IF signal for analog demodulation. When the digital signal is received, the wave detector 1003 composed of the detectors 1003a and 1003b and 90° phase shifter 1003c detects the IF signal for digital by means of the regenerative carrier signal of the regenerative carrier oscillator 1004. The output thus detected is output to the digital demodulation portion in the following stage respectively through the output terminals 1005a and 1005b.

When an analog signal is received the IF signal for analog is fed to the wave detector for analog 1006, detected by the carrier signal of the regenerative carrier oscillator 1007, and then output at the output terminal 1008. Here the wave detect output is a direct current voltage corresponding to the frequency of IF signal for analog and to that of the regular IF signal. An output corresponding to the channel select deviation of the channel selector 1002 can be obtained by supplying it to the low-pass filter 1010 through the dc amplifier 1009. This output, fed back as an AFC output to the channel selector 1002, contributes to enhanced accuracy of channel selection.

Such a system is considered to be critically vulnerable in particular when it is to be incorporated into IC system. First, the it should be noted that the regenerative carrier oscillator 1004 as used in the digital portion requires an extremely high accuracy of phase characteristic if such phase modulation system as multi-valued PSK is used. It is much difficult to design an oscillator having such high frequency signal output as regenerative carrier signal and, at the same time, good phase characteristic. It is therefore hardly feasible to incorporate it into an integrated circuit system. Making up the system of discrete units will cause the system to be by far of larger-sized than that with IC and increase consequently the manufacturing cost.

On the other hand the AFC which acquires certain data on channel selection deviation at the analog portion demands a high precision of oscillation frequency for the regenerative carrier oscillator 1007. It is therefore much troublesome for a circuit-integration in the sense that it requires some exterior adjustment against the dispersion in manufacturing the devices and that it reduces the yield due to the frequency drift in the oscillator. These factors will be lethal to the utilization of ICs.

In the conventional broadcast discriminating television receiver as described as another example, where a phase modulation, if any, is used as a digital modulation system, required is a regenerative carrier oscillator with high frequency signal output and high accuracy of phase characteristic. This factor made it further difficult to for the circuit-integration of the system. Moreover the AFC which can find some data on the channel select deviation in the analog portion required a high accuracy of oscillation frequency for the regenerative carrier oscillator as well as some external regulation against a dispersion in the manufacturing of devices.

EP 574 273 discloses a TV signal receiver having a combined AM-FM demodulator which includes a digitally modulated signal discriminator which controls the demodulation of the signal and the selection of the output signal from an analog demodulation pathway or from a digital demodulation pathway on the basis of an evaluation of the digital signal demodulator signal.

The present invention therefore seeks to provide a broadcast system discriminating television receiver which can distinguish an analog telecast from a digital one.

According to a first aspect of the invention there is provided a broadcasting system discriminating television receiver, comprising:
a selector which receives a broadcast signal and outputs the received broadcast signal to one of a first and second output;
an FM demodulator connected to the first output of selector for demodulating an FM-modulated analog broadcasting signal when received as an input;
a video circuit which converts the demodulated analog broadcasting signal into a first video signal;
an I/Q wave detector connected to the second output of selector which detects and outputs an I/Q modulated digital broadcast signal;
a digital demodulator which demodulates the detected I/Q-modulated digital broadcast signal into a second video signal; and
a video signal discriminator connected to the outputs of the video circuit and the digital demodulator;
wherein the selector selects one of the first and second selector outputs to which to output a received broadcast signal based on the output of the video signal discriminator.

According to a second aspect of the invention there is provided a broadcasting system discriminating television receiver, comprising:
a selector which receives a broadcast signal and outputs the received broadcast signal to one of a first and second output;
an FM demodulator connected to the first output of selector for demodulating a FM-modulated analog broadcast signal when received as an input;
a video circuit which converts an analog broadcast signal output from the FM demodulator into a video signal;
an I/Q wave detector connected to the second output of selector for detecting an I/Q modulated digital broadcast signal when received as input;
a digital demodulator which demodulates the I/Q-modulated digital broadcast signal into a video signal;
an FM-demodulation discriminator connected to the output of the FM demodulator for generating an output indicating whether an FM-modulated analog broadcast signal has been received as input to the FM demodulator;
an I/Q wave detection discriminator for generating an output indicating whether an I/Q demodulated digital broadcast signal has been received as input to the I/Q wave detector;
wherein the selector selects one of the first and second selector outputs to which to output a received broadcast signal based on the output from the FM demodulation discriminator and the output from the I/Q wave detection discriminator.

Thus, in accordance with one embodiment of the invention the signal selector SW can be controlled by determining if the signals input from the results of the respective discriminators are analog or digital to transfer the signal to the FM demodulating side in the case of an analog broadcast and to transfer the signal to the I/Q wave detect side in the case of a digital broadcast thereby permitting to automatically discriminate the broadcasting systems.

Additional advantages of the present invention will be apparent to persons skilled in the art from a study of the following description and the accompanying drawings, which are hereby incorporated in and constitute a part of this specification.

For a better understandings of the present invention and many of the attendant advantages thereof, reference will now be made by way of example to the accompanying drawings, wherein:
FIGURE 1 is a block diagram illustrating a system configuration intended to describe how to discern. by the conventional television receiver, between analog and digital telecast systems;
FIGURE 2 is a block diagram illustrating a system configuration exhibiting another example of the television receiving set responding to both the conventional digital and analog systems;
FIGURE 3 is a block diagram illustrating a system configuration to explain an example of the first embodiment of the broadcasting system discriminating television receiver by this invention;
FIGURE 4 is a block diagram illustrating a system configuration for explaining another example of the first embodiment of this invention;
FIGURES 5(a) and 5(b) are graphs for explaining the input spectrum of the FM demodulation discriminating unit as depicted in FIGURE 4;
FIGURES 6(A) and 6(b) are graphs for explaining the input spectrum of the I/Q wave detection discriminating unit;
FIGURE 7 is a block diagram illustrat-ing a system configuration of a broadcasting system discriminating television receiver.

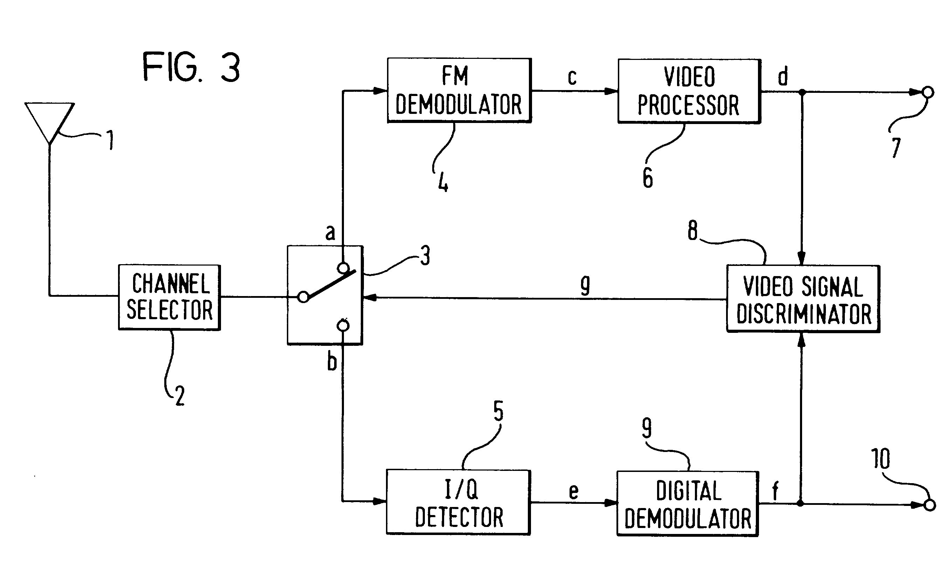

The present invention will be described in detail with reference to the FIGURES 3 through 6(b).

FIGURE 3 represents a block diagram of a telecast receiver intended to disclose an embodiment of this invention. The signal input from the antenna 1 selects a broadcasting channel by means of the channel selector 2. The signal thus selected is input into the broadcasting mode selector switch 3, which outputs the output signal a to the FM demodulator 4 in the case of analog broadcasting and the output signal b to the I/Q detector 5 in the case of a digital broadcasting.

In the event of the FM-modulated analog broadcasting, the output signal a is input into the FM demodulator 4, from where an FM-demodulated signal c is output. The demodulated signal c is applied to a video processor 6 which then outputs a video signal d to the outer terminal 7 and a video discriminator 8.

In the case of the multiple PSK-modulated digital broadcasting the output signal 3b is input into the I/Q wave detector 5 to output the I/Q-detected output signal e, which is input into the digital demodulator 9 to output the analog video signal f. On the one hand this is output as a video signal and input into the video discriminator 8 on the other.

In any television receiver configured as above, it is impossible to discern whether the input signal is of analog broadcasting or of digital one at the time when the signal is input into the antenna 1. It is therefore necessary to identify the signal by commuting beforehand the switch 3 for signal switching in either way. For explanation it is assumed here that the switch 3 has been changed over to the analog telecast side when the signal is input.

In the exemplary event of an analog telecast under these conditions, the signal input from the antenna 1 is transferred by the switch 3 to the FM demodulator 4 through the channel selector 2. The signal becomes the video signal output d in the video processor 6. This video signal is estimated to be correct or not by the video signal discriminator 8, which can be made up, for instance, of a circuit which determines if there be any marker pulse of the television video signal commonly well known. If an analog telecast is correctly received under these circumstances, the switch 3 is kept thrown to the analog broadcast side evaluating that the video signal discriminator 8 has correctly been receiving the signal.

If conversely a digital telecast is received in the same situation, no video signal is output to the output signal d of the video processor 6, which induces the video signal discriminator 8 to change the switch 3 to the digital telecast side recognizing that the signal has not been correctly received. The signal coming from the channel selector 2 is forwarded by the switch 3 to the I/Q detector 5. The signal e detected at the I/Q detector 5 is demodulated by the digital demodulator g to become a video signal f, which is supplied to the video signal discriminator 8 and output at the same time to video output 10. If a digital telecast is duly received under these conditions, then the switch 3 is held thrown to the digital broadcasting side evaluating that the video signal discriminator 8 has been righteously receiving the signal. Since no video signal is output to the output signal f of the digital demodulator 9 if any analog telecast is received when the switch 3 in such a state as above is on the digital telecast side, the video signal discriminator 8 will commute the switch 3 to analog telecast side considering , by the discriminating signal g, that the signal has not been correctly received.

Thus the switch 3 can be changed over automatically in response to the broadcasting system on the basis of the discriminating signal g generated at the video signal discriminator 8 to know whether the input signal as received from the antenna 1 is of analog telecast or of digital one.

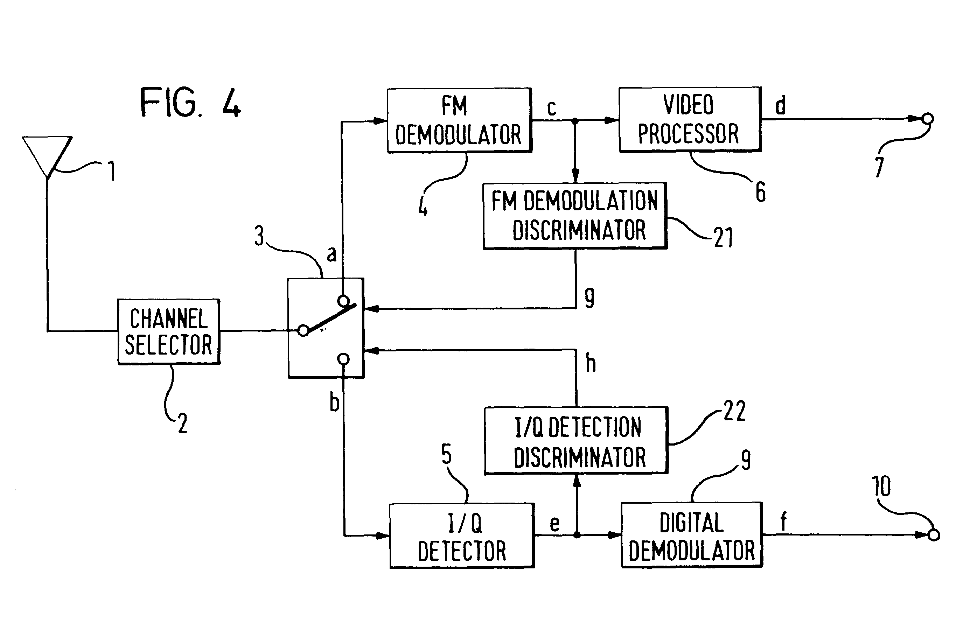

FIGURE 4 is a circuitry diagram intended to illustrate another example of the first embodiment of this invention. Like characters are used to denote like parts in FIGURE 3. The signal input from the antenna 1 acts to select due channel by way of the channel selector 2. In order to switch over the telecast system, this selecting signal is input into the switch 3, which outputs the output signal a if it matters an analog FM broadcasting and the output signal b if a digital one.

If the telecasting is of analog type, the output signal a is input into the FM demodulator 4, where the FM-demodulated signal c is output. This demodulated signal is input into the video processor 6 on the one hand and into the FM demodulation discriminator 21 on the other. The signal input into the video processor 6 will be output at the video output 7 as the video signal d.

In the event of a digital broadcasting, the output signal b is input into the I/Q wave detector 5, where the I/Q-detected output signal e is output. The output signal e will be input into the digital demodulator 9 on the one hand and into the I/Q wave detection discriminator 22 on the other. The signal input into the digital demodulator 9 is demodulated and then output at the video output 10 as the analog video signal f.

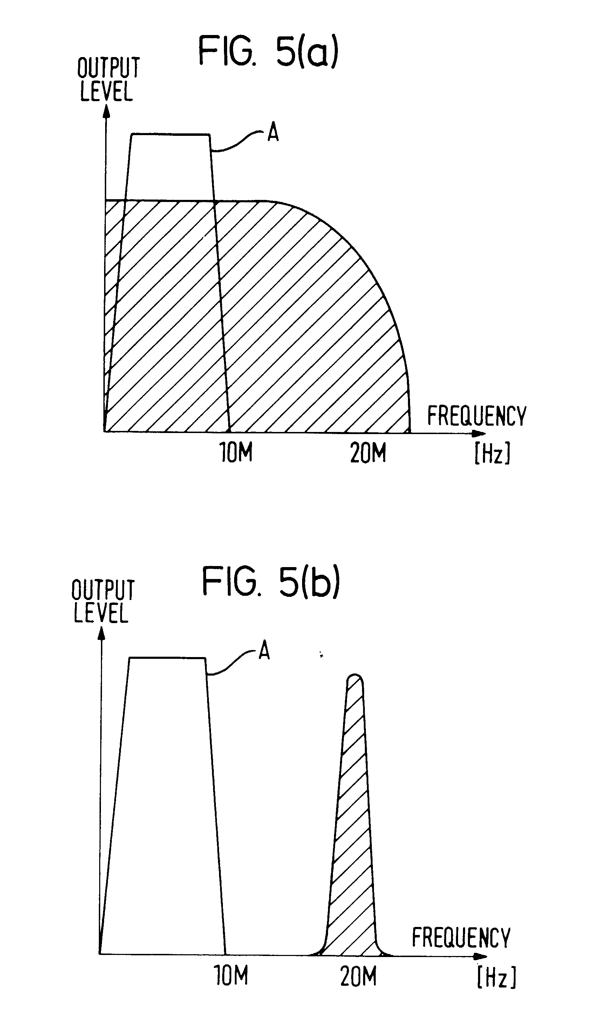

The discriminating signal g of the FM demodulation discriminator 21 and the discriminating signal h coming from the I/Q detection discriminator 22 are respectively input as the control signal of the switch 3 to switch the signal transfer paths. Here the FM demodulation discriminator 21 and the I/Q detection discriminator 22 can be discerned from each other by the respective characteristics of their signal spectrum. FIGURES 5(a) and 5(b) show the input spectrum in the FM demodulation discriminator 21. FIGURE 5(a) indicates the frequency spectrum of the analog telecast signal after the FM demodulation. Since in the analog FM broadcasting a dispersal signal is added to disperse the spectrum, a spectrum signal appears also on the low frequency side. On the other hand FIGURE 5(b) depicts the frequency spectrum after the multiple PSK signal in the digital telecast has been input into the FM demodulator. Since here the output signal is synchronized in phase by, for example, the FM demodulator under the demodulation system of the PLL circuit, a frequency carrier occurs on the high frequency side. It results from such features of frequency components that the FM demodulation discriminator 21 has such BPF characteristic as shown by a letter A in FIGURES 5(a) and 5(b). That is, the frequency spectrum signal can be extracted of the BPF, one of whose features is to draw out the frequency components in the low frequency area not containing any transmission carrier signal of the multiple PSK signal. If the level of this signal is high enough, the telecast can be identified as analog, and as digital if conversely the same level is low.

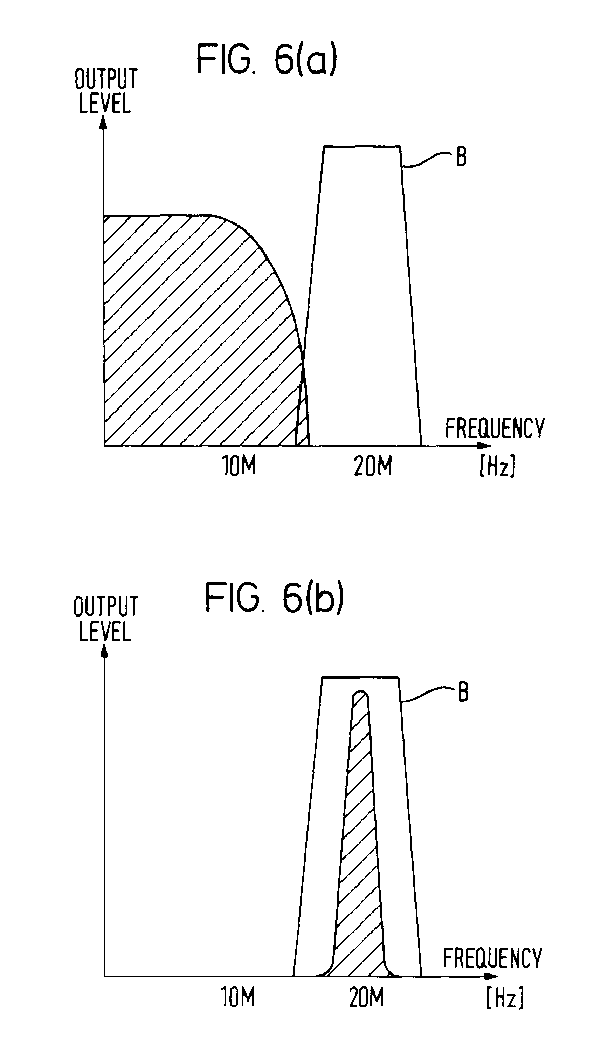

Similarly FIGURES 6(a) and 6(b) illustrate the input spectrum in the I/Q detection discriminator 22. FIGURE 6(a) indicates the frequency spectrum of the digital telecast signal after the I/Q wave detection. Since in any digital broadcasting the multiple PSK signal is input into the I/Q detector 5 and the frequency spectrum after detection reveals the frequency output of the transmission carrier signal, the frequency carrier appears on the high frequency side. Since on the other hand the input spectrum of the I/Q detection discriminator 22 implies that the detector makes the frequency conversion only when the analog telecast signal is input into the I/Q detector 5, the frequency spectrum concentrate on the low frequency side. From such features of the frequency components results such characteristic of the BPF in the I/Q detection discriminator 22 as shown by a letter B in FIGURES 6(a) and 6(b). In other words the BPF characterized by the extraction of the high frequency components including the transmission carrier signal of the multiple PSK signal only allows to extract the frequency spectrum signal and to deem the telecast as digital one if the level of the signal is high enough and as analog if it is low enough.

Whether the signal as input is of analog broadcast or of digital one cannot be estimated at the time when the signal enters the antenna 1. It is therefore necessary first to discriminate the signal by the switch 3 for the signal changeover to be commuted to either side. Here we presume that the switch 3 be thrown to the analog telecast side at the time when the signal is input.

In the event of an analog broadcasting under these circumstances the signal as input from the antenna 1 passes through the channel selecting circuit 2 and is transferred to the FM demodulator 4 by the switch 3 through the channel selecting circuit 2. Whether the FM demodulation signal is correct or not is determined by way of the FM demodulation discriminator 21. In this case the FM demodulation discriminator 21 will leave the switch 3 thrown to the analog telecast side judging that the correct signal has been received.

If a digital broadcast is received under these circumstances, the switch 3 is thrown to the digital telecast side considering that the FM demodulation discriminator has not duly been receiving the signal. The signal coming from the channel selector 2 will be transferred to the I/Q detector 5 by the circuit of the switch 3. As for the signal e as detected at the I/Q detector 5. the switch 3 will be commuted to the digital telecast side in consideration of the I/Q detection discriminator 22 judged as correctly receiving the signal.

If any analog broadcasting is received with the switch 3 kept thrown to the digital telecast side, the switch 3 will be changed automatically to the analog side estimating that the I/Q detection discriminator 22 has not duly been receiving the signal.

In this example the discrimination between analog and digital telecasts can be exerted by a simple configuration after the FM demodulator 4 and the I/Q detector 5. Because this distinction can be made in a portion nearer to the input of the television receiving system, it is possible to gain a faster identification of the broadcasting system, analog or digital.

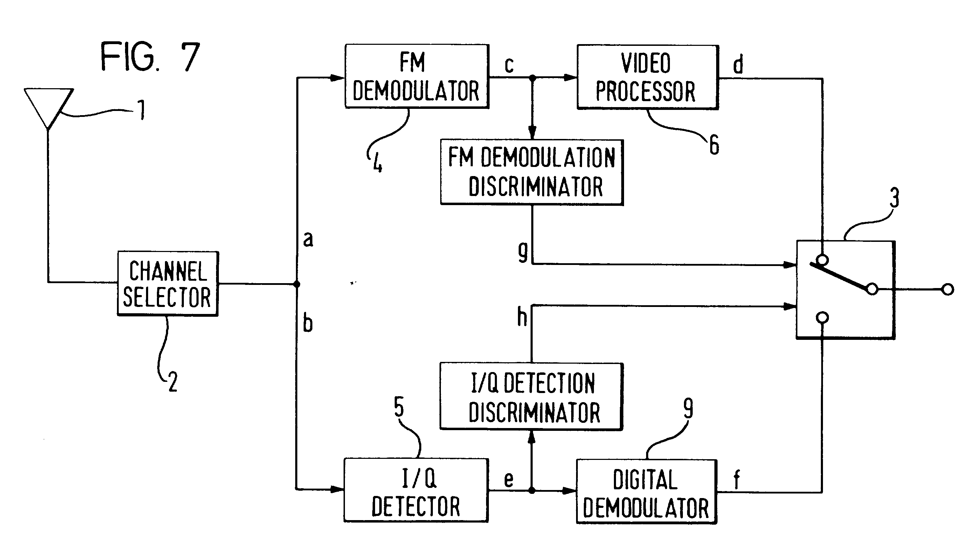

FIGURE 7 gives a circuitry diagram intended to explain another broadcasting system discriminating television receiver. The signal input from the antenna 1 selects the telecast by the channel selector 2. The select signal is then input into the FM demodulator 4 and the I/Q detector 5. Out of these signals first the signal input into the FM demodulator 4 will output the FM-demodulated signal c if it matters the analog telecast. This demodulated signal c will be input into the video processor 6 on the one hand, and into the FM demodulation discriminator 21 on the other. It will then be output at one of the inputs of the switch 3 as a video signal d input into the video processor 6.

In the event that the digital signal input is of digital telecast, the I/Q detector 5 will output the I/Q detected output signal e, which will then be input into the digital demodulator 9 on the one hand and into the I/Q detection discriminator 22 on the other. The signal input into the digital demodulator 9 is output as an analog video signal f at the other input of the switch 3.

The output signal g coming from the FM demodulation discriminator 21 and the output signal h from the I/Q detection discriminator 30 will enter respectively into the switch 3 to output video signals commuting their respective signal transfer routing.

Here both the FM demodulation discriminator 21 and the I/Q detection discriminator 22 can determine if the telecast is analog or digital by means of the characteristic of the signal spectrum in the system as has been thus far described referring to FIGURES 3A and 4A.

In any television receiver of this sort of configuration it is impossible to know if the signal is of analog type or digital one at the time just when the antenna 1 receives it. The signal input from the antenna 1 passes through the selector circuit 2 and arrives at the FM demodulator 4 where the FM demodulation discriminator 21 decides if the signal is a correct FM-demodulated signal. This FM demodulation discriminator 21, when it considers the signal to be correctly received, commutes the switch 3 in such a fashion that a video output can be obtained from the output of the video processor 6.

If the switch 3 receives a digital telecast under these conditions. then the FM demodulation discriminator 21 will output a video signal at the output of the digital demodulator 9 changing the switch 3 in consideration of the signal erroneously received. The signal coming from the channel selecting circuit 2 will reach the I/Q detector 5. The signal 15 as detected at the I/Q detector 5 will hold the switch 3 thrown as such considering that the I/Q detection discriminator 22 has righteously been receiving the signal.

If an analog telecast is received with the switch 3 thrown to the digital telecast side, the I/Q detection discriminator 22 commutes the switch 3 to the analog telecast side considering that a correct signal has not been received.

Since in this example the analog and digital broadcasting modes are identified after the FM demodulator 4 and the I/Q detector 5. the discrimination can be conducted at a portion of the television receiving system nearer to the input. which guarantees a faster discrimination between the analog and digital broadcasting.

As has been so far described, the telecast system discriminating television receiver according to the first embodiment of this invention will allow to make a distinction between the analog and digital broadcasts to commute automatically into the receiving state corresponding to each broadcasting mode.

As described above, the present invention can provide an extremely preferable broadcasting system discriminating television receiver.

While there have been illustrated and described what are at present considered to be preferred embodiments of the present invention. it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

## Claims

1. A broadcasting system discriminating television receiver, comprising:
a selector (3) which receives a broadcast signal and outputs the received broadcast signal to one of a first and second output;
an FM demodulator (4) connected to the first output of selector (3) for demodulating an FM-modulated analog broadcasting signal when received as an input;
a video circuit (6) which converts the demodulated analog broadcasting signal into a first video signal;
an I/Q wave detector (5) connected to the second output of selector (3) which detects and outputs an I/Q modulated digital broadcast signal;
a digital demodulator (9) which demodulates the detected I/Q-modulated digital broadcast signal into a second video signal; and
a video signal discriminator (8) connected to the outputs of the video circuit (6) and the digital demodulator (8);
wherein the selector selects one of the first and second selector outputs to which to output a received broadcast signal based on the output of the video signal discriminator (8).

2. A broadcasting system discriminating television receiver, comprising:
a selector (3) which receives a broadcast signal and outputs the received broadcast signal to one of a first and second output;
an FM demodulator (4) connected to the first output of selector (3) for demodulating a FM-modulated analog broadcast signal when received as an input;
a video circuit (6) which converts an analog broadcast signal output from the FM demodulator into a video signal;
an I/Q wave detector (5) connected to the second output of selector (3) for detecting an I/Q modulated digital broadcast signal (b) when received as input;
a digital demodulator (9) which demodulates the I/Q-modulated digital broadcast signal into a video signal;
an FM-demodulation discriminator (21) connected to the output of the FM demodulator (4) for generating an output indicating whether an FM-modulated analog broadcast signal has been received as input to the FM demodulator;
an I/Q wave detection discriminator (22) for generating an output indicating whether an I/Q demodulated digital broadcast signal has been received as input to the I/Q wave detector;
wherein the selector (3) selects one of the first and second selector outputs to which to output a received broadcast signal based on the output from the FM demodulation discriminator and the output from the I/Q wave detection discriminator.

## Patentansprüche

1. Fernsehempfänger, der Ausstrahlungssysteme unterscheidet, umfassend:
einen Wähler (3), der ein Fernsehsignal empfängt und das empfangene Fernsehsignal an einen ersten oder an einen zweiten Ausgang ausgibt:
einen FM-Demodulator (4), der mit dem ersten Ausgang des Wählers (3) verbunden ist und ein analog FM-moduliertes Fernsehsignal demoduliert, wenn es als Eingangssignal empfangen wird;
eine Videoschaltung (6), die das demodulierte analoge Ausstrahlungssignal in ein erstes Videosignal umsetzt;
einen I/Q-Signaldetektor (5), der mit dem zweiten Ausgang des Wählers (3) verbunden ist und ein I/Q-moduliertes digitales Ausstrahlungssignal detektiert und ausgibt;
einen Digitaldemodulator (9), der das detektierte I/Q-modulierte digitale Ausstrahlungssignal in ein zweites Videosignal demoduliert; und
einen Videosignaldiskriminator (8), der mit den Ausgängen der Videoschaltung (6) und des Digitaldemodulators (8) verbunden ist,
wobei der Wähler den ersten oder den zweiten Wählerausgang wählt und auf ihn abhängig vom Ausgangssignal des Videosignaldiskriminators (8) ein empfangenes Ausstrahlungssignal ausgibt.

2. Fernsehempfänger, der Ausstrahlungssysteme unterscheidet, umfassend:
einen Wähler (3), der ein Fernsehsignal empfängt und das empfangene Fernsehsignal an einen ersten oder an einen zweiten Ausgang ausgibt:
einen FM-Demodulator (4), der mit dem ersten Ausgang des Wählers (3) verbunden ist und ein analog FM-moduliertes Fernsehsignal demoduliert, wenn es als Eingangssignal empfangen wird;
eine Videoschaltung (6), die ein analoges Ausstrahlungssignal, das der FM-Demodulator ausgibt, in ein Videosignal umsetzt;
einen I/Q-Signaldetektor (5), der mit dem zweiten Ausgang des Wählers (3) verbunden ist und ein I/Q-moduliertes digitales Ausstrahlungssignal (b) detektiert, wenn es als Eingangssignal empfangen wird;
einen Digitaldemodulator (9), der das I/Q-modulierte digitale Ausstrahlungssignal in ein Videosignal demoduliert;
einen FM-Demodulationsdiskriminator (21), der mit dem Ausgang des FM-Demodulators (4) verbunden ist und ein Ausgangssignal erzeugt, das angibt, ob ein FM-moduliertes analoges Ausstrahlungssignal als Eingangssignal des FM-Demodulators empfangen wird;
einen I/Q-Signaldetektordiskriminator (22), der ein Ausgangssignal erzeugt, das anzeigt, ob ein I/Q-demoduliertes digitales Ausstrahlungssignal als Eingangssignal des I/Q-Signaldetektors empfangen wird,
wobei der Wähler (3) den ersten oder den zweiten Wählerausgang wählt und auf ihn abhängig vom Ausgangssignal des FM-Demodulationsdiskriminators und dem Ausgangssignal des I/Q-Signaldetektordiskriminators ein empfangenes Ausstrahlungssignal ausgibt.

## Revendications

1. Un récepteur de télévision avec un discriminateur du système de diffusion, comprenant :
un sélecteur (3) qui reçoit un signal diffusé et délivre, vers l'une d'une première ou seconde sortie, le signal diffusé ainsi reçu ;
un démodulateur MF (4) relié à la première sortie du sélecteur (3) pour démoduler un signal de diffusion analogique modulé MF lorsqu'il est reçu en tant qu'entrée ;
un circuit vidéo (6) qui convertit, en un premier signal vidéo, le signal de diffusion analogique démodulé ;
un détecteur d'onde I/Q (5) relié à la seconde sortie du sélecteur (3) qui détecte et délivre un signal diffusé numérique modulé I/Q ;
un démodulateur numérique (9) qui démodule, en un second signal vidéo, le signal diffusé numérique modulé I/Q ; et
un discriminateur de signal vidéo (8) relié aux sorties du circuit vidéo (6) et du démodulateur numérique (8) ;
dans lequel le sélecteur sélectionne une des première et seconde sorties du sélecteur pour délivrer un signal diffusé reçu basé sur la sortie du discriminateur de signal vidéo (8).

2. Un récepteur de télévision avec un discriminateur du système de diffusion, comprenant :
un sélecteur (3) qui reçoit un signal diffusé et délivre, vers l'une d'une première ou seconde sortie, le signal diffusé ainsi reçu ;
un démodulateur MF (4) relié à la première sortie du sélecteur (3) pour démoduler un signal diffusé analogique modulé MF lorsqu'il est reçu en tant qu'entrée ;
un circuit vidéo (6) qui convertit, en un signal vidéo, un signal diffusé analogique sortant du démodulateur MF ;
un détecteur d'onde I/Q (5) relié à la seconde sortie du sélecteur (3) pour détecter un signal diffusé numérique modulé I/Q (b) lorsqu'il est reçu en tant qu'entrée ;
un démodulateur numérique (9) qui démodule, en un signal vidéo, le signal diffusé numérique modulé I/Q ;
un discriminateur de démodulation MF (21) relié à la sortie du démodulateur MF (4) pour générer une sortie indiquant si un signal diffusé analogique modulé MF a été reçu en tant qu'entrée sur le démodulateur MF ;
un discriminateur de détection d'onde I/Q (22) pour générer une sortie indiquant si un signal diffusé numérique démodulé I/Q a été reçu en tant qu'entrée sur le détecteur d'onde I/Q ;
dans lequel le sélecteur (3) sélectionne l'une des première et seconde sorties du sélecteur pour délivrer un signal diffusé reçu basé sur la sortie du discriminateur de démodulation MF et la sortie du discriminateur de détection d'onde I/Q.
